# EUROPÄISCHE PATENTSCHRIFT

(11) **EP 0 826 327 B1**
(45) Veröffentlichungstag und Bekanntmachung des Hinweises auf die Patenterteilung: **08.05.2002**
(21) Anmeldenummer: 97112801.2
(22) Anmeldetag: 25.07.1997
(51) Int. Cl.: A47C 1/032

(54) **Sitzmöbelelement mit einer gekoppelten Rückenlehnen- und Sitzverstellung**
Seating furniture with synchronised seat and backrest
Meuble d'assise avec siège et dossier synchronisé

(30) Priorität: 28.08.1996 DE 19634665
(43) Veröffentlichungstag der Anmeldung: 04.03.1998
(73) Patentinhaber: Jungjohann, Thomas, 88521 Ertingen-Binzwangen (DE)
(72) Erfinder: Moll, Reiner, 73527 Schwäbisch Gmünd (DE)
(74) Vertreter: Gesthuysen, von Rohr & Eggert

(56) Entgegenhaltungen:
- WO-A-95/25452
- DE-A- 2 459 109
- GB-A- 529 793
- US-A- 4 452 486
- US-A- 5 636 898

## Beschreibung

Die Erfindung betrifft ein Sitzmöbelelement o. dgl., insbesondere Polstermöbelelement, mit einer gekoppelten Rückenlehnen- und Sitzverstellung mit den Merkmalen des Oberbegriffs von Anspruch 1. Unter einem Sitzmöbelelement ist auch ein sitzfähiges Liegemöbel zu verstehen, z. B. eine Polsterliege mit hochstellbarem Rückenteil oder ein entsprechendes Krankenhausbett.

Bekannt sind aus dem Stand der Technik unterschiedlich komfortable und unterschiedlich aufwendig konstruierte Sitzmöbelelemente (Sessel, Polstersessel, Ruhesessel, Bus-, Bahn- und Flugzeugsitze, Liegemöbel mit hochstellbarem Rückenteil), insbesondere Polstermöbelelemente, bei denen die Rückenlehnenverstellung und die Sitzverstellung gekoppelt sind. Einen guten Überblick des insgesamt bekannten Standes der Technik gibt die den Ausgangspunkt für die Lehre der vorliegenden Erfindung bildende WO 95 / 25 452.

Bekannt ist zunächst ein Sitzmöbelelement (Fig. 1, 2 der WO 95 / 25 452), bei dem die Rückenlehne mit dem Sitz eine winkelsteife Einheit bildet, die am Traggestell um eine Schwenkachse unterhalb des Sitzes so schwenkbar befestigt ist, daß die Rückenlehne beim Rückkippen in die Liegestellung nach hinten und unten kippt, während der Sitz am hinteren Ende nach unten und am vorderen Rand selbstverständlich nach oben schwenkt. Das erfolgt normalerweise gegen die Kraft einer Rückstellfeder. Hier stört die winkelsteife Verbindung von Rückenlehne und Sitzverstellung, es gibt also keine gestreckte Position von Rückenlehne und Sitz. Außerdem stört es, daß der vordere Rand des Sitzes in Liegestellung erheblich nach oben bewegt wird, was den Beinen des Benutzers nicht besonders zuträglich ist.

Relativ weit verbreitet ist eine Konstruktion eines Sitzmöbelelementes (Fig. 3, 4 der WO 95 / 25 452), bei der das Traggestell rahmenartig gestaltet ist. Die Rückenlehne ist am rückwärtigen Teil des rahmenartigen Traggestelles schwenkbar angelenkt mit erheblichem Abstand oberhalb eines Anlenkpunktes der Rückenlehne am hinteren Rand des Sitzes. Der hintere Rand des Sitzes wird dabei mittels der Rückenlehne am Traggestell getragen. Am vorderen Rand oder nahe dem vorderen Rand ist der Sitz in einer Verschiebeführung geführt, die nur eine leichte Aufwärtsneigung aufweist, so daß der vordere Rand des Sitzes sich beim Übergang von der Sitzstellung in die Liegestellung zwar nach vorn, jedoch nur geringfügig nach oben bewegt.

Bei dem zuvor erläuterten System kann ein Benutzer sich durch Verlagern des Körpergewichts relativ leicht und ohne große Kraftaufbringung in verschiedene Stellungen zwischen der Sitzstellung und der Liegestellung bringen. Allerdings ist es zumeist erforderlich, mit einer zusätzlich Bremseinrichtung zu arbeiten, um eine bestimmte gewünschte Position auch einhalten zu können.

Ein Nachteil bei dem Sitzmöbelelement ist Folge der Schwenkverbindung der Rükkenlehne und des Sitzes etwa im Winkelscheitel der beiden Elemente. Die Verbindung beider Elemente ist zwar konstruktiv einfach, beide Elemente tragen aber regelmäßig Polsterauflagen. Die vom Benutzer benutzten Polsterflächen der Polsterauflagen liegen somit etwas oberhalb des Sitzes bzw. vor der Rückenlehne und damit etwas oberhalb bzw. vor der Schwenkachse zwischen Rükkenlehne und Sitz. Das hat zur Folge, daß beim Übergang von der Sitzstellung in die Liegestellung die Polsterautlagen sich voneinander entfernen, was den von Benutzern als sehr unangenehm empfundenen "Hemdauszieheffekt" zur Folge hat.

Ein weiteres Problem, das gleichfalls Folge der zuvor erläuterten Schwenkverbindung im Winkelscheitel ist, ist ein "Loch", das sich im Becken-/Rückenbereich beim Übergang von der Sitzstellung in die Liegestellung bildet. Dieses "Loch" stört dann, wenn es zu groß ist, da der Becken-/Lendenbereich dann in Liegestellung nicht mehr richtig unterstützt wird.

Schließlich bedarf die Anbringung des Sitzes am vorderen Rand der sorgfältigen Beachtung, damit kein zu starker Stoß in die Kniekehlen des Benutzers beim Übergang von der Sitzstellung in die Liegestellung auftritt.

Im Stand der Technik ist bereits versucht worden, den "Hemdauszieheffekt" dadurch zu eliminieren, daß zwischen Rückenlehne und Sitz im Bereich des hinteren Randes bzw. unteren Randes eine Verbindungsmechanik vorgesehen ist, die die Achse der Schwenkverbindung zwischen Rückenlehne und Sitz etwa dorthin legt, wo die Oberflächen der beiden Polsterauflagen in Sitzstellung aneinanderstoßen. Das wird durch randseitig von den jeweiligen Rahmen vorspringende Laschen realisiert, die nur an ihren freien Enden miteinander schwenkbar verbunden sind (Fig. 5, 6 WO 95 / 25 452).

Bei dem Sitzmöbelelement wird ein erheblicher Vorteil gegenüber den früher bekannten Sitzmöbelelementen dadurch realisiert, daß der Anlenkpunkt der Rückenlehne am Traggestell nicht oberhalb des Anlenkpunktes der Rückenlehne am Sitz, sondern erheblich unterhalb davon vorgesehen ist. Auch dies geschieht über eine Hebelmechanik, wobei eine Kniegelenkverbindung eine zusätzliche überlagerte Neigungsbewegung der Rückenlehne realisiert. Der Sitz selbst ist mit erheblichem Abstand von dem Anlenkpunkt der Rückenlehne am Traggestell nahe seinem vorderen Rand am Traggestell schwenkbar angelenkt. Da dieser Anlenkpunkt nahe dem vorderen Rand des Sitzes liegt, hebt sich der vordere Rand des Sitzes beim Übergang von der Sitzstellung in die Liegestellung weniger stark an als bei dem aus den Stand der Technik bekannten Sitzmöbelelementen.

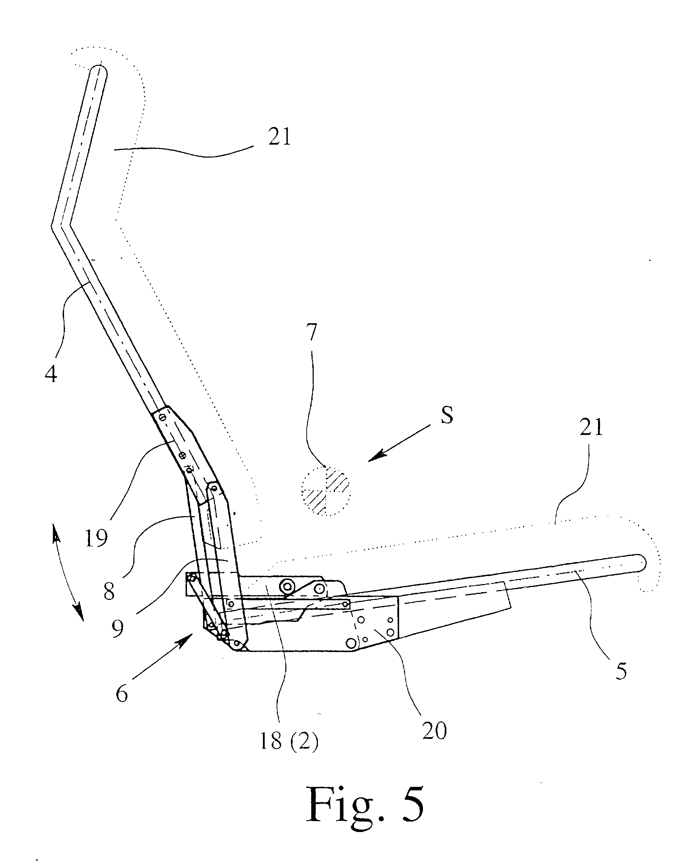

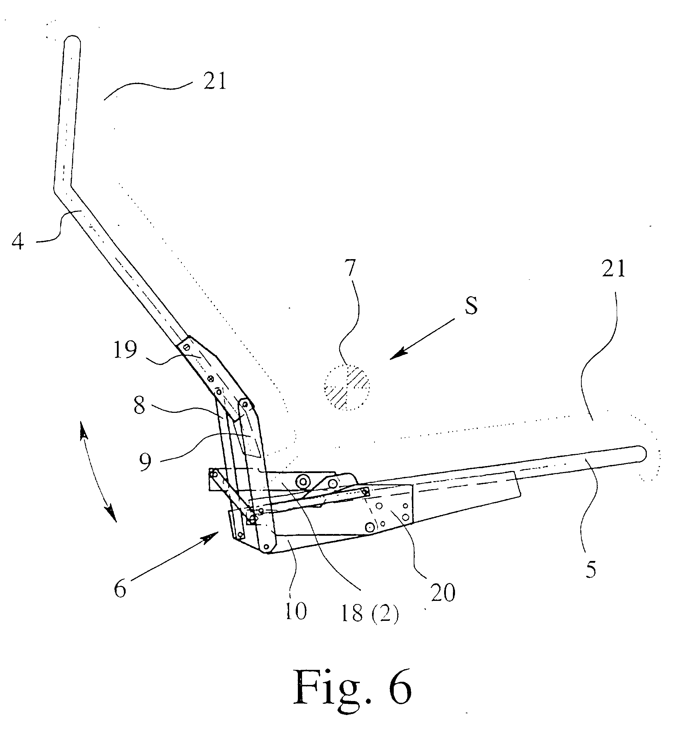

Eine Analyse des zuvor erläuterten, bekannten Sitzmöbelelementes hat ergeben, daß dort nach wie vor der "Hemdauszieheffekt" merkbar ist, wenn man eine hinreichend gestreckte Liegestellung erreichen will. Die in Fig. 5 und 6 der WO 95 / 25 452 dargestellte Lageänderung macht deutlich, daß nur eine relativ geringe Rückkippbewegung der Rückenlehne möglich ist, wenn man nicht doch einen vergleichsweise starken "Hemdauszieheffekt" in Kauf nehmen will. Überdies ist auch das "Loch" im Bekken-/Rückenbereich noch zu stark. Schließlich zeigt jedenfalls das Ausführungsbeispiel des zuvor erläuterten Standes der Technik (Fig. 5, 6), daß ein starkes Anheben des vorderen Randes des Sitzes erfolgt. Das mag für einen Sitz mit Fußstütze noch hinnehmbar sein, für ein Sitzmöbelelement der in Rede stehenden Art, das regelmäßig eine ausklappbare Fußstütze aufweist, kommt das nicht in Betracht.

Der Erfindung liegt somit das Problem zugrunde, das bekannte, zuvor ausführlich erläuterte Sitzmöbelelement o. dgl. mit einer gekoppelten Rückenlehnen- und Sitzverstellung so auszugestalten und weiterzubilden, daß der "Hemdauszieheffekt" möglichst gering wird oder gänzlich wegfällt.

Die zuvor aufgezeigte Aufgabe ist bei einem Sitzmöbelelement o. dgl. mit den Merkmalen des Oberbegriffs von Anspruch 1 durch die Merkmale des kennzeichnenden Teils von Anspruch 1 gelöst.

Erfindungsgemäß ist analysiert worden, daß es in Sitzstellung einem solchen Sitzmöbelelement immanent ist, daß sich eine Person bei korrektem Sitzen mit ihrer Hüfte immer ungefähr an ein und derselben Stelle auf dem Sitz befindet. Wo diese Stelle genau liegt, hängt natürlich von verschiedenen Einflußfaktoren ab, beispielsweise von der Höhe der Polsterauflage, dem Gewicht der Person, der Körpergröße der Person und dem Körperbau - männlich oder weiblich. Im großen und ganzen kann man aber sagen, daß der Drehpunkt des Körpers eines Benutzers sich immer in einem relativ eng begrenzten Bereich oberhalb des Sitzes und vor der Rückenlehne befinden wird.

Von der zuvor erläuterten Analyse ausgehend ist alsdann analysiert worden, wie man eine Längenveränderung in der Fläche der Polsterauflage an der Rückenlehne zum Hüftdrehpunkt des Benutzers beim Übergang von der Sitzstellung in die Liegestellung vermeiden kann. Diese Längenveränderung ist nämlich die Ursache für den zuvor erläuterten "Hemdauszieheffekt". Naturgemäß bleibt der Benutzer beim Übergang von der Sitzstellung in die Liegestellung auf dem Sitz sitzen, er rutscht nicht nach vorn und nicht zurück, folglich ist anzustreben, daß auch der Rücken des Benutzers auf der Oberfläche der Polsterauflage der Rückenlehne seine Lage nicht verändert.

Es ist dann ferner festgestellt worden, daß das gewünschte Ergebnis dann erreicht wird, wenn die Rückenlehne als Rückkipp- und Absenkbewegung im wesentlichen eine Schwenkbewegung um eine im Winkel von Rückenlehne und Sitz vor der Rükkenlehne und oberhalb des Sitzes liegende Schwenkachse ausführt. Es geht um die Schwenkachse für die Schwenkbewegung der Rückenlehne allein, nicht etwa um den im Stand der Technik realisierten Anlenkpunkt zwischen Rückenlehne und Sitz, den es bei dem erfindungsgemäßen Sitzmöbelelement nicht gibt.

Untersuchungen haben ergeben, daß die Schwenkachse zwischen 70 und 180 mm vor der ungepolsterten Rückenlehne und zwischen 50 und 170 mm oberhalb des ungepolsterten Sitzes liegen sollte. Damit erreicht man den Bereich der Lage des Hüftdrehpunktes normaler Benutzer, so daß die Schwenkachse wie gewünscht etwa im Hüftdrehpunkt eines normalen Benutzers liegt. Wesentlich ist also, daß die Schwenkachse der Rückenlehne mit Abstand oberhalb bzw. vor den Polsterflächen der Polsterauflagen liegt, wenn auch bei sehr weichen Polsterauflagen gegebenenfalls wegen starken Einsinkens des Körpers des Benutzers mitunter auch näher der Ebene der nicht belasteten Polsterauflagen.

Die Lehre der Erfindung kann man auf zwei unterschiedliche Arten realisieren. Eine erste Realisierungsmöglichkeit besteht darin, daß die Rückenlehne an in Höhe der Schwenkachse am Traggestell angebrachten Schwenkgelenken angelenkt ist. Dies ist jedoch konstruktiv nicht die optimale Lösung, da man damit am Traggestell Anlenkpunkte körperlich schaffen muß, die oberhalb des Sitzes und vor der Rückenlehne liegen. Das erfordert ein entsprechend voluminöses Traggestell. Dieses wiederum ist aus Gründen der gestalterischen Freiheit nicht optimal.

Optimal ist hingegen eine zweite Realisierung, die dadurch gekennzeichnet ist, daß die Verbindungsmechanik die Schwenkbewegung der Rückenlehne um die lediglich virtuell vorhandene Schwenkachse realisiert. Innerhalb der Verbindungsmechanik lassen sich unterschiedliche Möglichkeiten realisieren, die Schwenkbewegung der Rückenlehne ohne körperlich vorhandene Schwenkachse zu realisieren, die Schwenkachse also nur virtuell vorhanden zu haben. Dabei sind geschickt gestaltete Lenkerführungen ebenso denkbar wie Kulissenführungen.

Zu berücksichtigen ist bei der Lehre der Erfindung, daß der Hüftdrehpunkt eines Benutzers gegenüber dem Sitz beim Übergang von der Sitzstellung in die Liegestellung (und umgekehrt) im wesentlichen unverändert bleibt, daß sich aber nach der Lehre der Erfindung der Sitz selbst geringfügig verlagert. Ohne eine Verlagerung des Sitzes ließe sich nämlich keine Kraft durch Gewichtsverlagerung zum Zwecke der gekoppelten Rückenlehnen- und Sitzverstellung vom Benutzer in die Konstruktion einbringen. Bei einer sehr geringfügigen Verlagerung des Sitzes beim Übergang von der Sitzstellung in die Liegestellung kann man die Schwenkachse für die Rückenlehne als am Traggestell ortsfest definieren. Ist die Verlagerung des Sitzes stärker, so muß sich die Schwenkachse der Rückenlehne der Verlagerung des Sitzes entsprechend selbst verlagern.

Für weitere vorteilhafte Ausgestaltungen und Weiterbildungen der Lehre der Erfindung darf auf die dem Patentanspruch 1 nachgeordneten weiteren Patentansprüche verwiesen werden.

Besondere eigenständige Bedeutung kommt der weiteren Lehre zu, daß die Verstellmechanik in einem separat handelbaren Koppelbeschlag zusammengefaßt wird. Das hat bei entsprechend kompakter Gestaltung der Verstellmechanik, die erfindungsgemäß verwirklicht werden kann, den großen Vorteil, daß man einen solchen speziellen Koppelbeschlag als eigenständiges handelsfähiges Teil realisieren kann.

Im folgenden wird die Erfindung anhand einer lediglich Ausführungsbeispiele darstellenden Zeichnung näher erläutert. In der Zeichnung zeigt
- Fig. 1: In einer Seitenansicht, stark schematisiert, ein Sitzmöbelelement, die Sitzstellung in durchgezogenen Linien gezeichnet, die Liegestellung in gestrichelten Linien gezeichnet,
- Fig. 2: die Verstellmechanik des Sitzmöbelelementes in einer vergrößerten Darstellung in Sitzstellung,
- Fig. 3: die Verstellmechanik aus Fig. 2 in einer Ansicht von oben,
- Fig. 4: die Verstellmechanik von Fig. 2 in einer Ansicht von links,
- Fig. 5: ein Sitzmöbelelement mit Polsterauflagen punktiert angedeutet, jedoch ohne ein äußeres Traggestell, in Sitzstellung.
- Fig. 6: das Sitzmöbelelement aus Fig. 5 in leicht zurückgelehnter Sitzstellung,
- Fig. 7: das Sitzmöbelelement aus Fig. 5 in leicht angehobener Liegestellung,
- Fig. 8: das Sitzmöbelelement aus Fig. 5 in vollständiger Liegestellung.

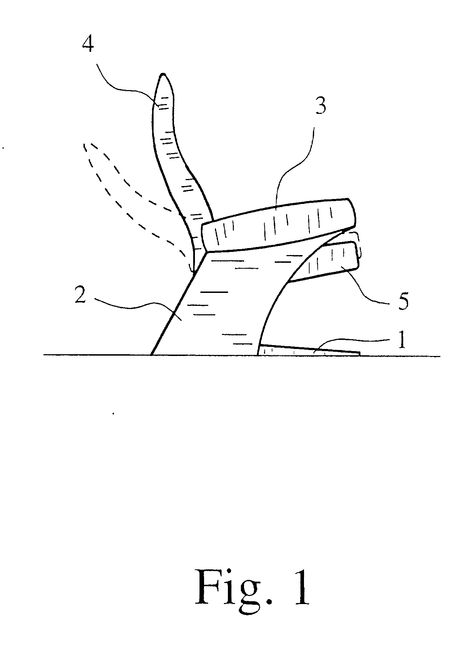

Das in der Zeichnung dargestellte, zunächst in Fig. 1 schematisch erläuterte Sitzmöbelelement o. dgl. ist im Regelfall und nach bevorzugter Ausführung ein Polstermöbelelement. Das bedeutet aber nicht, daß es nicht im Grundsatz auch ohne Polsterauflagen realisiert werden kann, beispielsweise als Garten-Sitzmöbelelement aus Kunststoff oder Holz. Wie oben schon angeführt worden ist, bezieht sich die Erfindung auf Sitzmöbelelemente im allgemeinsten Verständnis, also Elemente mit Sitz- und Rückenlehne, deren Verstellungen gekoppelt sind. Folglich kann es sich um Sessel, Polstersessel, Ruhesessel, aber auch um Bus-, Bahn- und Flugzeugsitze, um Zweisitzer-Sofas oder Dreisitzer-Sofas, gegebenenfalls auch um Liegemöbel, die sitzfähig sind, beispielsweise Krankenhausbetten mit hochstellbarem Rückenteil oder entsprechende Polsterliegen handeln.

Fig. 1 zeigt zunächst das Sitzmöbelelement, das eine gekoppelte Rückenlehnen- und Sitzverstellung aufweist mit einem Traggestell 2, mit dem das Sitzmöbelelement auf dem Boden 1 steht und mit am Traggestell 2 angedeuteten, dick gepolsterten Armlehnen 3. Am Traggestell 2 ist verstellbar befestigt eine Rückenlehne 4 sowie entsprechend verstellbar ein Sitz 5.

Fig. 1 zeigt in durchgezogenen Linien die Sitzstellung von Rückenlehne 4 und Sitz 5, während gestrichelte Linien die Liegestellung von Rückenlehne 4 und Sitz 5 zeigen.

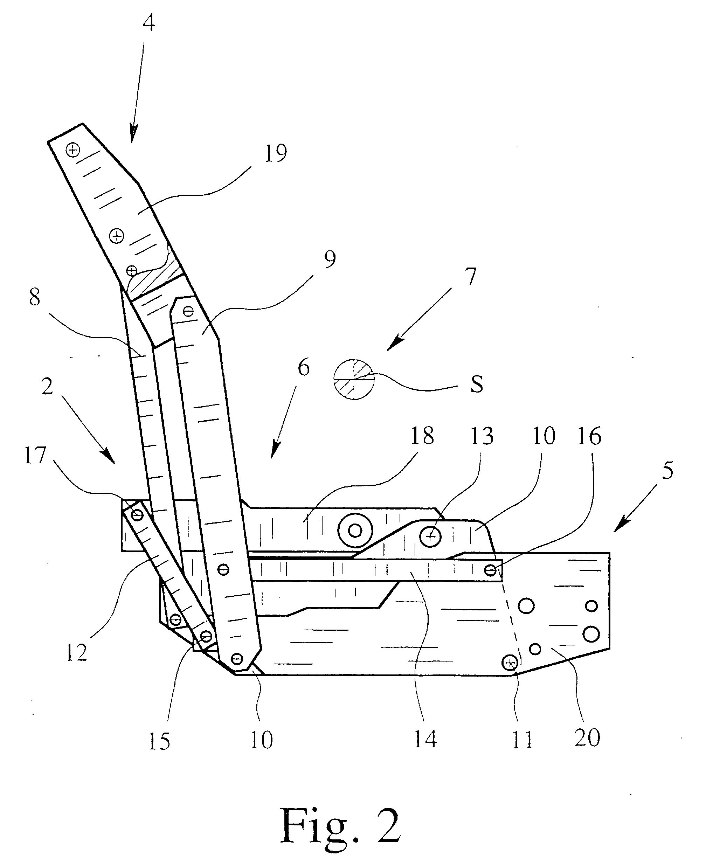

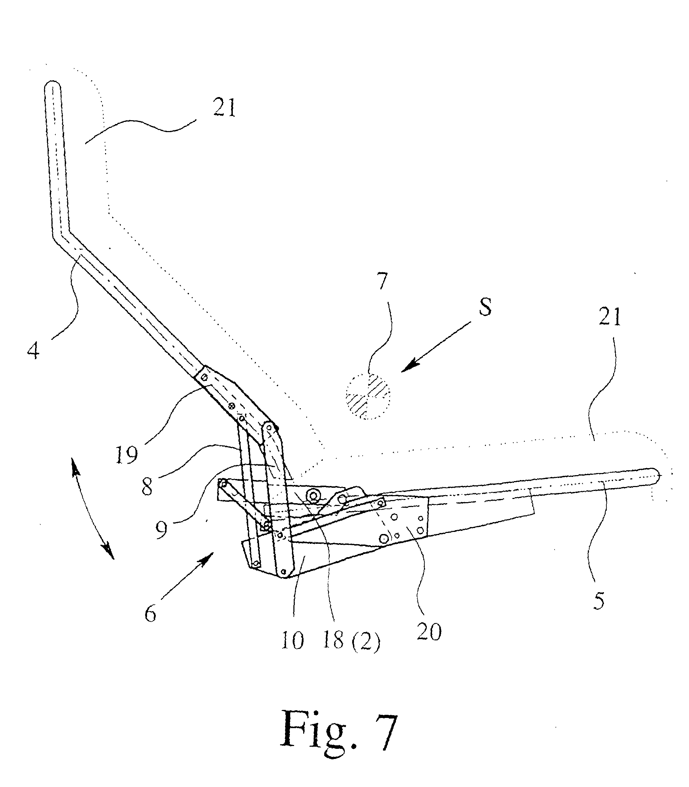

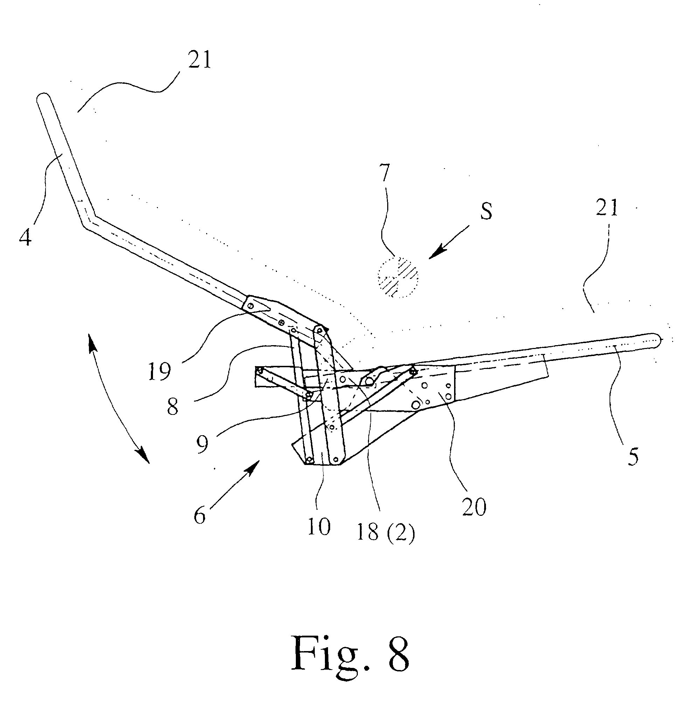

Zum besseren Verständnis darf nun auf Fig. 2 sowie die unterschiedliche Stellungen zeigenden Fig. 5 bis 8 verwiesen werden.

Das Sitzmöbelelement weist zunächst eine Verbindungsmechanik 6 zwischen dem Traggestell 2, der Rückenlehne 4 und dem Sitz 5 auf, die eine synchrone Verstellung von Rückenlehne 4 und Sitz 5 realisiert. Solche Verbindungsmechaniken 6 sind bekannt, insbesondere als Hebelmechaniken oder Kulissenmechaniken.

Die Rückenlehne 4 führt gegenüber dem Traggestell 2 aus der höchsten, aufgerichteten Position, der Sitzstellung, in die niedrigste, gestreckte Position, die Liegestellung, eine überlagerte Rückkipp- und Absenkbewegung aus. Das macht Fig. 1 deutlich, ist im übrigen im Stand der Technik ausführlich beschrieben.

Der Sitz 5 führt aus der Sitzstellung in die Liegestellung eine nur geringfügige Bewegung, insbesondere eine wesentlich geringfügigere Bewegung als die Rückenlehne 4 aus, im dargestellten und bevorzugten Ausführungsbeispiel wie auch im Stand der Technik schon bekannt eine überlagerte Verschiebe- und Anhebebewegung. Eine Anhebebewegung des Sitzes 5 beim Übergang von der Sitzstellung in die Liegestellung hat zum Ergebnis, daß die Gewichtsverlagerung eines Benutzers beim Versuch, sich wieder in die Sitzstellung aufzurichten, dazu genutzt wird, daß der Sitz 5 durch das höhere Gewicht des Benutzers nach unten gedrückt wird und dadurch die Rükkenlehne 4, gegebenenfalls unterstützt von der Rückstellfeder, wieder aufrichtet. Ganz ohne jede Verlagerung des Sitzes 5 geht es bei dieser Art Sitzmöbelelementen mit gekoppelter Rückenlehnen- und Sitzverstellung nicht, das liegt auf der Hand.

Der in den Fig. 5 bis 8 angedeutete Hüftdrehpunkt 7 des Körpers einer sitzenden Durchschnittsperson befindet sich logischerweise bei korrektem Sitzen in einer bestimmten Lage vor der Rückenlehne 4 und oberhalb des Sitzes 5. Wie im allgemeinen Teil der Beschreibung erläutert worden ist, verschiebt sich der Hüftdrehpunkt 7 beim Übergang von der Sitzstellung in die Liegestellung gegenüber dem Sitz 5 nicht oder nur wenig. Ziel der Erfindung ist es, eine entsprechend geringe Verlagerung auch gegenüber der Rückenlehne 4 zu erreichen.

Hier ist vorgesehen, daß die Rückenlehne 4 als Rückkipp- und Absenkbewegung im wesentlichen eine Schwenkbewegung um eine im Winkel von Rückenlehne 4 und Sitz 5 vor der Rückenlehne 4 und oberhalb des Sitzes 5 liegende Schwenkachse S ausführt. Die Schwenkbewegung der Rückenlehne 4 ist durch einen die beiden möglichen Bewegungsrichtungen andeutenden Doppelpfeil angedeutet. Im dargestellten Ausführungsbeispiel fällt die Schwenkachse S mit dem Hüftdrehpunkt 7 zusammen. Das ist das Optimum der Lehre der Erfindung.

Tatsächlich gibt es natürlich soviel unterschiedliche Benutzer, daß man nur mit einer Näherung an den Hüftdrehpunkt 7 für die Schwenkachse S arbeiten kann. Erfindungsgemäß ist daher vorgesehen, daß die Schwenkachse S zwischen 70 und 180 mm vor der ungepolsterten Rückenlehne 4 und zwischen 50 und 170 mm oberhalb des ungepolsterten Sitzes 5 liegt.

Im allgemeinen Teil der Beschreibung ist ausführlich erläutert worden, daß es bei stärkerer Verlagerung des Sitzes 5 zweckmäßig ist, daß sich die Schwenkachse S der Verlagerung des Sitzes 5 entsprechend selbst verlagert. Diese Verlagerung ist zwar verglichen mit der Verlagerung der Rückenlehne 4 relativ geringfügig, sie optimiert aber den Bewegungsablauf des Sitzmöbelelementes.

Insgesamt wird erreicht, daß der eingangs auführlich erläuterte "Hemdauszieheffekt" bei diesem Sitzmöbelelement praktisch nicht mehr auftritt. Gleichzeitig ist auch die Verlagerbarkeit von Rückenlehne 4 und Sitz 5 beim Übergang von der Sitzstellung in die Liegestellung und umgekehrt außerordentlich leicht, also ohne großen Kraftaufwand-möglich.

Im allgemeinen Teil der Beschreibung ist schon darauf hingewiesen worden, daß es zwei Möglichkeiten gibt, die Schwenkachse S für die Rückenlehne 4 zu realisieren. Nicht dargestellt ist die erste Möglichkeit, für die gilt, daß die Rückenlehne 4 an in Höhe der Schwenkachse S am Traggestell 2 angebrachten Schwenkgelenken angelenkt ist. Diese konstruktive Lösung ist zwar einfach, hat aber zwei wesentliche Nachteile. Zunächst ist es nicht möglich, die an sich für die Optimierung der Lehre gewünschte Verlagerbarkeit der Schwenkachse S entsprechend der Verlagerung des Sitzes zu realisieren. Zweitens stören die oberhalb des Sitzes 5 am Traggestell 2 dann notwendigerweise vorhandenen Schwenkgelenke. Das Traggestell 2 macht dann nämlich eine Größe erforderlich, die die gestalterischen Freiheiten des Designers eines Sitzmöbelelementes in unerwünschter Weise begrenzt.

Bevorzugt ist daher im vorliegenden Ausführungsbeispiel vorgesehen, daß die Verbindungsmechanik 6 die Schwenkbewegung der Rükkenlehne 4 um die selbst lediglich virtuell vorhandene Schwenkachse S realisiert. Mit dieser virtuell vorhandenen Schwenkachse S kann man durch entsprechend geschickte Gestaltung der Verbindungsmechanik 6 weitgehend frei umgehen.

Zuvor ist ausgeführt worden, daß die Gestaltung der Verbindungsmechanik 6 auf ganz unterschiedliche Arten möglich ist. Für eine virtuelle Realisierung einer Schwenkachse kommt einem generell zunächst eine Kulissenführung in den Sinn. Das läßt sich auch im vorliegenden Fall realisieren. Eine Vielzahl anderer konstruktiver Lösungen ist denkbar. Das dargestellte Ausführungsbeispiel realisiert jedoch eine Lenkerverbindung, da die Verbindungsmechanik 6 hier eine Mehrzahl von Verbindungslenkern aufweist.

Im einzelnen ist bevorzugt und insoweit erläutert anhand von Fig. 2 vorgesehen, daß die Rückenlehne 4 über zwei Rückenlehnenlenker 8, 9 mit einem Hauptlenker 10 verbunden ist, der seinerseits am Traggestell 2 schwenkbar angelenkt ist. Die Rückenlehnenlenker 8, 9 können zusammen mit der Rückenlehne 4 und den dort beabstandeten Anlenkpunkten sowie den beabstandeten Anlenkpunkten am Hauptlenker 10 ein unregelmäßiges Viereck bilden. Das dargestellte zeichnet sich aber dadurch aus, daß die Rückenlehnenlenker 8, 9 mit der Rückenlehne 4 und dem Hauptlenker 10 ein Lenker-Parallelogramm bilden. Man erkennt in den Fig. 5 bis 8, welchen besonderen Bewegungsablauf man mit dieser Parallelogramm-Gestaltung verwirklichen kann. Mit einer anderen Konstellation lassen sich andere Effekte erzielen.

Weiter ist in diesem Ausführungsbeispiel vorgesehen, daß der Sitz 5 einerseits an einem am Traggestell 2 angebrachten Lenker, insbesondere am Hauptlenker 10 angelenkt ist, andererseits mit Abstand zum Hauptlenker-Anlenkpunkt 11 über einen Sitzlenker 12 am Traggestell 2 angelenkt ist. Bevorzugt ist dabei vorgesehen, daß die Verbindungslinie zwischen dem Hauptlenker-Anlenkpunkt 11 und dem Traggestell-Anlenkpunkt 13 des Hauptlenkers 10 - nur - ungefähr parallel zum Sitzlenker 12 verläuft. Durch diese spezielle Gestaltung wird die sich wiederum aus den Fig. 5 bis 8 ergebene Bewegung des Sitzes 5 erreicht, der nur sehr geringfügig angehoben und nach vorne verschoben wird. Die Bewegungskopplung von Rückenlehne 4 und Sitz 5 erfolgt dabei nicht nur über den Hauptlenker 10, sondern auch dadurch, daß der Sitz 5 über einen Verbindungslenker 14 an einem Rückenlehnenlenker 9 angelenkt ist. Der Verbindungslenker 14 schafft die eindeutige Zuordnung der Neigungslage des Sitzes 5 zur Rückenlehne 4, die ansonsten davon abhinge, wie sich die Person gerade auf dem Sitz 5 befindet.

Vorgesehen ist im Ausführungsbeispiel, daß der Verbindungslenker 14 am Sitz 5 mit Abstand vom Hauptlenker-Anlenkpunkt 11 und vom Sitzlenker-Anlenkpunkt 15 angelenkt ist. Das in Fig. 2 dargestellte Ausführungsbeispiel macht deutlich, daß sich der Verbindungslenker-Anlenkpunkt 16 am Sitz 5 deutlich oberhalb des Hauptlenker-Anlenkpunktes 11 und mit erheblichem seitlichem Abstand vom Sitzlenker-Anlenkpunkt 15, jedoch auch oberhalb von diesem befindet. Tatsächlich ist damit ein Lenker-Parallelogramm aus dem unteren Teil des rechten Rückenlehnenlenkers 9, dem Hauptlenker 10, dem Verbindungslenker 14 und dem Sitz 5 realisiert. Der Sitz 5 ist also dadurch mit der Rückenlehne 4 über zwei gekoppelte Lenker-Parallelogramme gekoppelt.

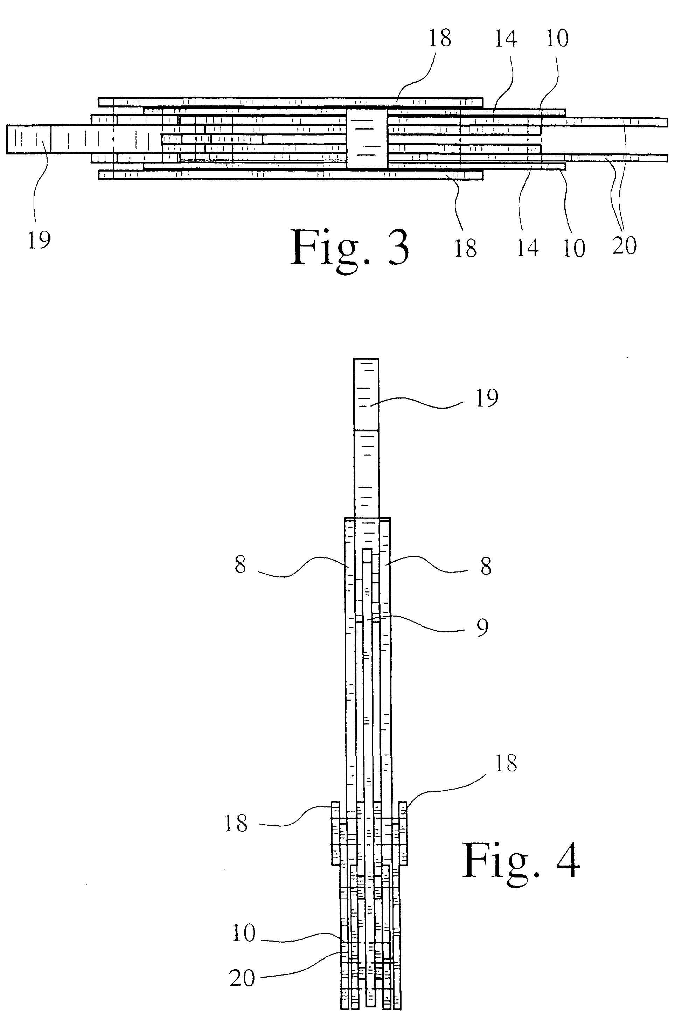

Die Fig. 3 und 4 machen deutlich, daß im Ausführungsbeispiel aus Gründen der Kraftaufnahme und Kraftübertragung einzelne oder alle Lenker als Doppel-Lenker ausgeführt sind. Die beiden Ansichten in Fig. 3 und Fig. 4 machen dabei ferner deutlich, wie diese verschiedenen Lenker in verschiedenen Ebenen liegen. Es ist jeweils nur ein Lenker mit dem Bezugszeichen bezeichnet, aus Symmetrieüberlegungen resultiert dann die Zuordnung des jeweiligen Doppel-Lenkers dazu.

Die Zeichnung zeigt nicht die im Stand der Technik bekannte und auch bei der Erfindung realisierte Rückstellfeder. Diese kann in die Verbindungsmechanik 6 integriert sein.

Besonders bevorzugt ist es möglich, die Traggestell-Anlenkpunkte 10, 17 in einem Traggestell-Befestigungsträger 18, der hier als Befestigungsplatte ausgeführt ist, zu integrieren. Auch diese Befestigungsplatte ist als Doppelplatte ausgeführt, wie Fig. 3 und Fig. 4 erkennen lassen.

Die Traggestell-Anlenkpunkte 10, 17 sind so nahe aneinander heran gerückt, daß man eine Anordnung in ganz nahem Abstand vornehmen kann, das erlaubt die Konzentrierung in dem Befestigungsträger 18.

In Fig. 2 und in den Fig. 5 bis 8 gut erkennbar ist vorgesehen, daß alle Rückenlehnen-Anlenkpunkte in einem Rückenlehnen-Befestigungsträger 19 integriert sind und die eigentliche Rückenlehne 4 an dem Rückenlehnen-Befestigungsträger 19 abnehmbar befestigt ist. Fig. 2 zeigt die Befestigungslöcher für die eigentliche Rückenlehne 4 am Rückenlehnen-Befestigungsträger 19, die Fig. 5 bis 8 zeigen den Zusammenbau. Entsprechendes gilt für den Sitz 5, es gilt dabei also, daß alle Sitz-Anlenkpunkte in einem Sitz-Befestigungsträger 20 integriert sind und der eigentliche Sitz 5 an dem Sitz-Befestigungsträger 20 abnehmbar befestigt ist.

Die Realisierung von Rückenlehnen-Befestigungsträger 19 und Sitz-Befestigungsträger 20 hat den großen Vorteil, daß die gesamte Verbindungsmechanik 6 als Universal-Komponente für Sitzmöbelelemente eingesetzt werden kann, also mit unterschiedlichen Rückenlehnen 4 und Sitzen 5 ausgerüstet werden kann. Die Fig. 5 bis 8 zeigen dabei punktiert die Polsterauflagen 21 auf Rückenlehne 4 und Sitz 5.

Das Ausführungsbeispiel macht deutlich, daß aufgrund der ideenreichen, Konstruktion eine besonders kompakte Gestaltung gelungen ist. Es ist realisiert, daß sich alle Lenker und Anlenkpunkte nahe dem Winkelscheitel von Rückenlehne 4 und Sitz 5 befinden, nämlich in Sitzstellung vorzugsweise in einer Fläche von 15 bis 40 cm im Quadrat liegen.

Nicht dargestellt ist in der Zeichnung, daß es möglich ist, daß die Verbindungsmechanik 6 von einem Gehäuse umschlossen ist, aus dem lediglich der Rückenlehnen-Befestigungsträger 19 und der Sitz-Befestigungsträger 20 beweglich herausragen.

Im allgemeinen Teil der Beschreibung ist bereits auf die besondere Bedeutung der integrierten Gestaltung der erfindungsgemäß realisierten Verbindungsmechanik 6 hingewiesen worden. Letztlich zeigt Fig. 2, daß sich die Lehre der Erfindung in einem Koppelbeschlag für ein Sitzmöbelelement realisiert, bei dem alle Traggestell-Anlenkpunkte 10, 17 in einem Traggestell-Befestigungsträger 18 integriert sind, alle Rückenlehnen-Anlenkpunkte in einem Rückenlehnen-Befestigungsträger 19 integriert sind und alle Sitz-Anlenkpunkte in einem Sitz-Befestigungsträger 20 integriert sind. Optimiert wird ein solcher Koppelbeschlag durch das weiter oben schon angegebene Gehäuse, aus dem nur der Rückenlehnen-Befestigungsträger 19 und der Sitz-Befestigungsträger 20 beweglich herausragen und das im übrigen mit Befestigungsmitteln zur Befestigung des innenliegenden Traggestell-Befestigungsträgers 18 am Traggestell 2 ausgerüstet ist.

Der Vollständigkeit halber ist festzuhalten, daß normalerweise zwei Verbindungsmechaniken 6 am Traggestell 2 rechts und links von der Rückenlehne 4 und dem Sitz angebracht sind, die Rückenlehne 4 und Sitz 5 zwischen sich tragen.

Ferner ist der guten Ordnung halber festzuhalten, daß die Verschiebe- und Anhebe-bewegung des Sitzes 5 am vorderen Rand durch eine Gleit-Verschiebeführung oder auch durch eine Lenker-Verschiebeführung realisiert werden kann, wie das an sich aus dem Stand der Technik umfangreich bekannt ist.

## Patentansprüche

1. Sitzmöbelelement o. dgl., insbesondere Polstermöbelelement, mit einer gekoppelten Rückenlehnen- und Sitzverstellung.
mit einem Traggestell (2),
mit einer am Traggestell (2) verstellbar befestigten Rückenlehne (4),
mit einem am Traggestell (2) verstellbar befestigten Sitz (5),
mit einer Verbindungsmechanik (6) zwischen dem Traggestell (2), der Rückenlehne (4) und dem Sitz (5), die eine synchrone Verstellung von Rückenlehne (4) und Sitz (5) realisiert,
wobei die Rückenlehne (4) aus der höchsten, aufgerichteten Position, der Sitzstellung, in die niedrigste, gestreckte Position, die Liegestellung, gegenüber dem Traggestell (2) eine überlagerte Rückkipp- und Absenkbewegung ausführt,
wobei der Sitz (5) aus der Sitzstellung in die Liegestellung eine geringfügige Bewegung, vorzugsweise eine überlagerte Verschiebe- und Anhebebewegung ausführt,
wobei, vorzugsweise, eine Rückstellfeder vorgesehen ist,
**dadurch gekennzeichnet,**
**daß** die Rückenlehne (4) als Rückkipp- und Absenkbewegung im wesentlichen eine Schwenkbewegung um eine im Winkel von Rückenlehne (4) und Sitz (5) vor der Rückenlehne (4) und oberhalb des Sitzes (5) liegende Schwenkachse (S) ausführt.

2. Sitzmöbelelement nach Anspruch 1, **dadurch gekennzeichnet, daß** die Schwenkachse (S) zwischen 70 und 180 mm vor der ungepolsterten Rückenlehne (4) und zwischen 50 und 170 mm oberhalb des ungepolsterten Sitzes (5) liegt und/oder daß sich die Schwenkachse (S) der Verlagerung des Sitzes (5) entsprechend selbst verlagert.

3. Sitzmöbelelement nach Anspruch 1 oder 2, **dadurch gekennzeichnet, daß** die Rükkenlehne (4) an in Höhe der Schwenkachse (S) am Traggestell (2) angebrachten Schwenkgelenken angelenkt ist oder daß die Verbindungsmechanik (6) die Schwenkbewegung der Rückenlehne (4) um die selbst lediglich virtuell vorhandene Schwenkachse (S) realisiert.

4. Sitzmöbelelement nach einem der Ansprüche 1 bis 3, **dadurch gekennzeichnet, daß** die Verbindungsmechanik (6) eine Mehrzahl von Verbindungslenkern aufweist und, vorzugsweise, daß die Rückenlehne (4) über zwei Rückenlehnenlenker (8, 9) mit einem Hauptlenker (10) verbunden ist, der seinerseits am Traggestell (2) schwenkbar angelenkt ist, sowie, nochmals vorzugsweise, daß die Rückenlehnenlenker (8, 9) mit der Rückenlehne (4) und dem Hauptlenker (10) ein Lenker-Parallelogramm bilden.

5. Sitzmöbelelement nach Anspruch 4, **dadurch gekennzeichnet, daß** der Sitz (5) einerseits an einem am Traggestell (2) angebrachten Lenker, insbesondere am Hauptlenker (10) angelenkt ist, andererseits mit Abstand zum Hauptlenker-Anlenkpunkt (11) über einen Sitzlenker (12) am Traggestell (2) angelenkt ist und, vorzugsweise, daß die Verbindungslinie zwischen dem Hauptlenker-Anlenkpunkt (11) und dem Traggestell-Anlenkpunkt (13) des Hauptlenkers (10) - nur - ungefähr parallel zum Sitzlenker (12) verläuft.

6. Sitzmöbelelement nach Anspruch 4 oder 5, **dadurch gekennzeichnet, daß** der Sitz (5) über einen Verbindungslenker (14) an einem Rückenlehnenlenker (9) angelenkt ist und, vorzugsweise, daß der Verbindungslenker (14) am Sitz (5) mit Abstand vom Hauptlenker-Anlenkpunkt (11) und vom Sitzlenker-Anlenkpunkt (15) angelenkt ist.

7. Sitzmöbelelement nach einem der Ansprüche 4 bis 6, **dadurch gekennzeichnet, daß** einzelne oder alle Lenker als Doppel-Lenker ausgeführt sind.

8. Sitzmöbelelement nach einem der Ansprüche 1 bis 7, **dadurch gekennzeichnet, daß** die Rückstellfeder in die Verbindungsmechanik (6) integriert ist und/oder daß alle Traggestell-Anlenkpunkte (10, 17) in einem Traggestell-Befestigungsträger (18) integriert sind und/oder daß alle Rückenlehnen-Anlenkpunkte in einem Rückenlehnen-Befestigungsträger (19) integriert sind und die eigentliche Rückenlehne (4) an dem Rückenlehnen-Befestigungsträger (19) abnehmbar befestigt ist und/oder daß alle Sitz-Anlenkpunkte in einem Sitz-Befestigungsträger (20) integriert sind und der eigentliche Sitz (5) an dem Sitz-Befestigungsträger (20) abnehmbar befestigt ist und/oder daß sich alle Lenker und Anlenkpunkte nahe dem Winkelscheitel von Rükkenlehne (4) und Sitz (5) befinden, nämlich in Sitzstellung vorzugsweise in einer Fläche von 15 bis 40 cm im Quadrat liegen.

9. Sitzmöbelelement nach einem der Ansprüche 1 bis 8, **dadurch gekennzeichnet, daß** die Verbindungsmechanik (6) von einem Gehäuse umschlossen ist, aus dem lediglich der Rückenlehnen-Befestigungsträger (19) und der Sitz-Befestigungsträger (20) beweglich herausragen.

10. Koppelbeschlag für ein Sitzmöbelelement nach Anspruch 8, gegebenenfalls auch nach Anspruch 9, bestehend aus der Verbindungsmechanik (6) mit Traggestell-Befestigungsträger (18), Rückenlehnen-Befestigungsträger (19) und Sitz-Befestigungsträger (20) und, vorzugsweise, daß die Verbindungsmechanik (6) von einem Gehäuse umschlossen ist, aus dem lediglich der Rückenlehnen-Befestigungsträger (19) und der Sitz-Befestigungsträger (20) beweglich herausragen.

## Claims

1. Furniture element for sitting, or the like, in particular upholstered furniture element having a coupled backrest / seat adjustment,
having a support frame (2),
having a backrest (4) adjustably affixed to the support frame (2),
having a seat (5) adjustably affixed to the support frame (2),
having a connection mechanism (6) between the support frame (2), the backrest (4) and the seat (5) that realizes a synchronized adjustment of the backrest (4) and seat (5),
wherein, in relation to the support frame (2), the backrest (4) makes a superimposed backward tilting and lowering movement from the highest, upright position, the sitting position, to the lowest, outstretched position, the lying position,
wherein the seat (5) makes a slight movement from the sitting position to the lying position, preferably a superimposed pushing and raising movement,
wherein, preferably a position-returning spring is provided,
**characterized in**
**that** the backrest (4) essentially makes a swinging movement as a tilting and lowering movement around a rotating axis (S) located in the angle of the backrest (4) and seat (5) in front of the backrest (4) and above the seat (5).

2. Furniture element for sitting according to claim 1, **characterized in that** the rotating axis (S) is located between 70 and 180 nm in front of the bare backrest (4) and between 50 and 170 mm above the bare seat (5) and/or that the rotating axis (S) correspondingly moves the location of the seat (5) itself.

3. Furniture element for sitting according to claim 1 or 2, **characterized in that** the backrest (4) is attached to the swinging hinge on the support frame (2) at the same height as the rotating axis (S) or that the connecting mechanism (6) realizes the swinging movement of the backrest (4) around the merely virtual rotating axis (S).

4. Furniture element for sitting according to any one of claims 1 to 3, **characterized in that** the connecting mechanism (6) has a plurality of connecting guides and, preferably, that the backrest (4) is connected, via two backrest guides (8, 9), to a main guide (10) that is rotatably attached on its side to the support frame (2) as well as, again preferably, that the backrest guides (8, 9) form a guide parallelogram with the backrest (4) and the main guide (10).

5. Furniture element for sitting according to claim 4, **characterized in that** on the one hand, the seat (5) is attached to a guide on the support frame (2) and on the other hand, is attached to the support frame (2) via a seat guide (12) at a distance from the main guide hinge point (11) and the support frame hinge point (13) of the main guide (10) runs - only - mostly parallel to the seat guide (12).

6. Furniture element for sitting according to claim 4 or 5, **characterized in that** the seat (5) is attached to a backrest guide (9) via a connecting guide (14) and, preferably, that the connecting guide (14) is attached to the seat (5) at a distance from the main guide hinge point (11) and from the seat guide hinge point (15).

7. Furniture element for sitting according to any one of claims 4 to 6, **characterized in that** individual or all guides are formed as double guides.

8. Furniture element for sitting according to any one of claims 1 to 7, **characterized in that** the position-returning spring is integrated in the connecting mechanism (6) and/or that all support frame guide points (10, 17) are integrated in a support frame mount arm (18) and/or that all backrest hinge points are integrated in one backrest mount arm (19) and the actual backrest (4) is removably affixed to the backrest mount arm (19) and/or that all seat hinge points are integrated in a seat mount arm (20) and the actual seat (5) is removably affixed to the seat mount arm (20) and/or that all guides and hinge points are located near the angle vortex of the backrest (4) and seat (5), namely, in the sitting position preferably in an area of 15 to 40 square cm.

9. Furniture element for sitting according to any one of claims 1 to 8, **characterized in that** the connecting mechanism (6) is encased in a housing from which the backrest mount arm (19) and the seat mount arm (20) movably extend.

10. Coupling device for a furniture element for sitting according to claim 8, if necessary, also according to claim 9, consisting of the connecting mechanism (6) having a support frame mount arm (18), a backrest mount arm (19) and a seat mount arm (20) and, preferably, that the connecting mechanism (6) is encased in a housing from which the backrest mount arm (19) and the seat mount arm (20) movably extend.

## Revendications

1. Elément de siège ou analogues, en particulier élément de meuble rembourré muni d'un réglage couplé du dossier et du siège, comprenant
une armature de support (1),
un dossier (2) fixé de manière réglable à l'armature de support (1),
un siège (3) fixé de manière réglable à l'armature de support (1),
dans lequel le dossier (2) et le siège (3) sont reliés en mobilité l'un à l'autre dans la zone du sommet de l'angle, le dossier (2) étant articulé, à une certaine distance au-dessus du sommet de l'angle, à un axe de pivotement (4) sur l'armature de support (1) et le siège (3) étant appliqué en mobilité sur l'armature de support (1) à proximité du bord avant, à l'aide d'une mécanique de support (5, 6),
dans lequel, le dossier (2) effectue, à partir de la position dressée la plus haute, la position assise, jusque dans la position étendue la plus basse, la position couchée, un mouvement superposé de basculement vers l'arrière et d'abaissement par rapport à l'armature de support (1),
dans lequel le siège (3) effectue, à partir de la position assise, jusque dans la position couchée, de manière synchronisée, un léger mouvement, de préférence un mouvement superposé de déplacement et de soulèvement, et
dans lequel, de préférence, on prévoit un ressort de rappel,
**caractérisé**
**en ce que** la liaison du dossier (2) avec le siège (3) présente, dans la zone du sommet de l'angle - de part et d'autre - deux axes de liaison (8, 9), qui s'étendent dans deux coulisses en forme de trous oblongs (10, 11),
**en ce que** la première paire (8, 10) constituée par l'axé de liaison (8) et par la coulisse en forme de trou oblong (10) est disposée contre le bord arrière du siège (3),
**en ce que** la deuxième paire (9, 11) constituée par l'axe de liaison (9) et par la coulisse en forme de trou oblong (11) est disposée contre le bord arrière du siège (3) à une certaine distance au-dessus de la première paire (8, 10).

2. Elément de siège selon la revendication 1, **caractérisé en ce que** la position assise et la position couchée sont définies par les positions terminales des axes de liaison (8, 9) dans les coulisses en forme de trous oblongs (10, 11).

3. Elément de siège selon la revendication 1 ou 2, **caractérisé en ce que** la deuxième paire (9, 11) est disposée à peu près au milieu de la distance séparant l'axe de pivotement (4) et la première paire (8, 10) et/ou **en ce que** la première paire (8, 10) est disposée sur le côté inférieur du siège (3) et/ou **en ce que** la deuxième paire (9, 11) est disposée approximativement à hauteur du côté supérieur d'un revêtement rembourré (12) sur le siège (3).

4. Elément de siège selon l'une quelconque des revendications 1 à 3, **caractérisé en ce que** le premier axe de liaison (8) est disposée contre le dossier (2) et la première coulisse en forme de trou oblong (10) est disposée contre le siège 3 et/ou **en ce que** le deuxième axe de liaison (9) est disposé contre le siège (3) et la deuxième coulisse en forme de trou oblong (11) est disposée contre le dossier (2).

5. Elément de siège selon l'une quelconque des revendications 1 à 4, **caractérisé en ce que** la première coulisse en forme de trou oblong (10) s'étend en direction rectiligne et est disposée, de préférence approximativement parallèlement au plan du siège (3) et/ou la deuxième coulisse en forme de trou oblong (11) s'étend en direction rectiligne et est disposée, de préférence approximativement perpendiculairement au plan du siège (3).

6. Elément de siège selon l'une quelconque des revendications 1 à 5, **caractérisé en ce que** la première coulisse en forme de trou oblong (10) s'étend en formant un arc concave, de préférence en formant un arc de cercle concave, et de préférence est située, à l'extrémité arrière, contre le bord inférieur du siège (3), plus bas qu'à l'extrémité avant.

7. Elément de siège selon l'une quelconque des revendications 1 à 6, **caractérisé en ce que** les parties tournées vers le dossier (2), en particulier par conséquent le premier axe de liaison (8) et la deuxième coulisse en forme de trou oblong (11), sont rassemblées en une armature de dossier (13) et/ou **en ce que** les parties tournées vers le siège (3) en particulier par conséquent le deuxième axe de liaison (9) et la première coulisse en forme de trou oblong (10), sont rassemblées en une armature de siège (14).

8. Elément de siège selon la revendication 7, **caractérisé en ce que** l'armature de dossier (13) et l'armature de siège (14) sont reliées l'une à l'autre pour former une armature conjointe et de préférence, sont entourées par un logement.

9. Elément de siège ou analogues, en particulier élément de meuble rembourré muni d'un réglage couplé du dossier et du siège, comprenant
une armature de support (1),
un dossier (2) fixé de manière réglable à l'armature de support (1),
un siège (3) fixé de manière réglable à l'armature de support (1),
dans lequel le dossier (2) et le siège (3) sont reliés en mobilité l'un à l'autre dans la zone du sommet de l'angle, le dossier (2) étant articulé, à une certaine distance au-dessus du sommet de l'angle, à un axe de pivotement (4) sur l'armature de support (1) et le siège (3) étant appliqué en mobilité sur l'armature de support (1) à proximité du bord avant, à l'aide d'une mécanique de support (5, 6),
dans lequel, le dossier (2) effectue, à partir de la position dressée la plus haute, la position assise, jusque dans la position étendue la plus basse, la position couchée, un mouvement superposé de basculement vers l'arrière et d'abaissement par rapport à l'armature de support (1),
dans lequel le siège (3) effectue, à partir de la position assise, jusque dans la position couchée, de manière synchronisée, un léger mouvement, de préférence un mouvement superposé de déplacement et de soulèvement, et
dans lequel, de préférence, on prévoit un ressort de rappel, en particulier conformément à l'une quelconque des revendications précédentes,
**caractérisé**
**en ce que** la liaison du dossier (2) avec le siège (3) présente, dans la zone du sommet de l'angle - de part et d'autre - trois axes de liaison (15, 16, 17) et une coulisse en forme de trou oblong (18),
**en ce que** le premier axe de liaison (15) s'étend dans la coulisse en forme de trou oblong (18) et cette paire (15, 18) est disposée devant le bord arrière du siège (3),
**en ce que** le deuxième axe de liaison (16) est disposé contre le dossier (2) à une certaine distance au-dessus de la paire (15, 18),
**en ce que** le troisième axe de liaison (17) est disposé contre le bord arrière du siège (3),
**en ce que** le deuxième axe de liaison (16) et le troisième axe de liaison (17) sont reliés l'un à l'autre via un bras auxiliaire (19).

10. Elément de siège ou analogues, en particulier élément de meuble rembourré muni d'un réglage couplé du dossier et du siège, comprenant
une armature de support (1),
un dossier (2) fixé de manière réglable à l'armature de support (1),
un siège (3) fixé de manière réglable à l'armature de support (1),
dans lequel le dossier (2) et le siège (3) sont reliés en mobilité l'un à l'autre dans la zone du sommet de l'angle, le dossier (2) étant articulé, à une certaine distance au-dessus du sommet de l'angle, à un axe de pivotement (4) sur l'armature de support (1) et le siège (3) étant appliqué en mobilité sur l'armature de support (1) à proximité du bord avant, à l'aide d'une mécanique de support (5, 6),
dans lequel, le dossier (2) effectue, à partir de la position dressée la plus haute, la position assise, jusque dans la position étendue la plus basse, la position couchée, un mouvement superposé de basculement vers l'arrière et d'abaissement par rapport à l'armature de support (1),
dans lequel le siège (3) effectue, à partir de la position assise, jusque dans la position couchée, de manière synchronisée, un léger mouvement, de préférence un mouvement superposé de déplacement et de soulèvement, et
dans lequel, de préférence, on prévoit un ressort de rappel,
en particulier conformément à l'une quelconque des revendications précédentes,
**caractérisé**
**en ce que** la liaison du dossier (2) avec le siège (3) est réalisé dans la zone du sommet de l'angle - de part et d'autre - via un bras auxiliaire (20) articulé en pivotement des deux côtés et s'étendant entre l'extrémité du dossier (2) et l'extrémité du siège (3).
